## Europäisches Patentamt
## European Patent Office
## Office européen des brevets

(11) Publication number: **0 111 781**
**B1**

# EUROPEAN PATENT SPECIFICATION

(45) Date of publication of patent specification: **13.01.88**

(21) Application number: **83111914.4**

(22) Date of filing: **14.05.79**

(60) Publication number of the earlier application in accordance with Art. 76 EPC: **0 030 230**

(51) Int. Cl.⁴: **F 01 D 17/16,** F 02 C 6/12, F 01 D 17/20

(54) Controller for a turbocharger arrangement.

(43) Date of publication of application:
**27.06.84 Bulletin 84/26**

(45) Publication of the grant of the patent:
**13.01.88 Bulletin 88/02**

(84) Designated Contracting States:
**DE FR**

(56) References cited:
FR-A-1 169 550
FR-A-2 236 083
US-A-3 811 364
US-A-4 130 989

(73) Proprietor: **OSBORN, Norbert L.**
**151 Regal Row Suite 120**
**Dallas TX 75247 (US)**

(72) Inventor: **OSBORN, Norbert L.**
**151 Regal Row Suite 120**
**Dallas TX 75247 (US)**

(74) Representative: **UEXKÜLL & STOLBERG**
**Patentanwälte**
**Beselerstrasse 4**
**D-2000 Hamburg 52 (DE)**

Courier Press, Leamington Spa, England.

## Description

The present invention relates to a controller for a turbocharger arrangement.

Turbocharging is normally thought of only as a means for increasing horsepower or decreasing full load specific fuel consumption. In the evolution of engines presently utilizing turbochargers, such as large heavy duty diesel engines, aircraft engines, racing engines and the like, this understanding has been adequate in that in the end application these engines are operated at or near full load for a large portion of the duty cycle. However, most applications do not require that the engine operate at or near full load for extended periods of time. In fact, in most applications, the engine generally is operated below 50% power and in many applications the engine operates well below 20% power during most of its operation. Examples of these applications are engines used in automobiles, light and medium trucks, generator sets, compressors, tractors, construction equipment and the like.

Engines operating at these low power settings are very inefficient. In a diesel engine, this inefficiency is a result of thermal efficiency decay as combustion temperature decreases and because the internal friction remains relatively constant regardless of load. In a gasoline engine, this inefficiency results from pumping loop loss increases with decreasing load and because the internal engine friction remains relatively constant regardless of load.

Thus, by utilizing a smaller "effective engine size", that is, an engine having a smaller displacement rate (the product of 1/2 displacement times engine speed for a four-cycle engine) by either a reduction in displacement, a reduction in operating speed or a combination of both, the part load fuel consumption may be improved. In gasoline engines, this improvement results from reduced engine friction and reduced pumping loop losses. In diesel engines, this improvement is a result of reduced engine friction and a higher thermal efficiency due to higher combustion temperatures.

To control the flow of motive gases through the turbine of a turbocharger it is known to provide a turbocharger with controlled vanes for varying the inlet nozzle area to the turbine rotor by means of a controller.

A known controller for such purpose (US—A—3,811,364) comprises a housing with two cylinder and piston motors with preloaded springs biasing the spring toward each other. The housing is sealed and within the housing a servo-fluid, preferably a hydraulic fluid, is provided. The servo-fluid is used for moving pistons within the housing and thereby changing the position of a piston rod which moves the turbine nozzle vanes to the position desired. By increasing fluid pressure between the pistons, the piston rod is first moved inwardly, and then outwardly in response to the communication of a higher pressure to the area between the pistons. Thus, the prior controller moves the piston rod controlling the position of the turbine nozzle vanes in one direction, in response to increase in pressure, up to a pre-determined pressure, and then moves the piston rod in the opposite direction upon a further increase in pressure.

Such prior controller is not permitting an optimum pressure versus movement control for adjusting the position of the turbine nozzle vanes. Further, it requires a servo-fluid for controlling the piston rod and therefore reliable sealing components are necessary. If a seal is broken, the controller will be rendered inoperable.

Another prior control arrangement (FR—A—2,236,083) for changing the angle of the nozzle vanes of a turbine or a compressor is provided with a pressure control slide and two actuating pistons. The pressure control slide is moved according to the changing pressure and against the force of a single spring to a position wherein hydraulic fluid under pressure is fed to one of the actuating pistons. Movement of the actuating piston due to the pressure of the hydraulic fluid results in movement of a control ring coupled to the nozzle vanes. Because hydraulic fluid is used, this system must be fluid tight. Further, the prior arrangement provides a uni-directional motion with pressure and cannot be used to provide an optimum pressure versus movement control.

It is an object of the invention to provide a controller for controlling the turbine nozzle vanes of a turbocharger to the position desired which controller is of simple and reliable construction so that a rather sudden linear motion change to the actuator rod, in response to increased pressure, can be achieved.

To solve such object, a turbocharger arrangement having a turbine rotor and controlled vanes for varying the inlet nozzle area to the turbine rotor, a controller for controlling said vanes having a housing and piston structure slidable within the housing with a rod attached to said piston structure and in turn attached to said vanes whereby said vanes are moved upon movement of said piston structure, said housing defining a first cylinder and a second cylinder of a smaller cross-sectional area than said first cylinder, a first piston slidable within said first cylinder, a second piston slidable within said second cylinder, is improved by a rod attached to said second piston and slidable in one direction to said first piston, said rod connected to the vanes whereby the inlet nozzle area to the turbine rotor is controlled by the axial movement of said rod, first compression spring means biasing said rod and first piston towards said second piston, second compression spring means positioned between said first and second pistons, said second spring means having a greater spring force in compression than said first spring means, first vent means for venting a first pressure to the cylinder area between said first and second pistons to apply said first pressure on confronting faces of said first and second pistons, and second vent means for communicating a second pressure to the face of said first and second pistons opposite to the confronting faces of said pistons.

In the present controller, when the second vent pressure is substantially less than the first vent pressure, the pressure differential acting on the two pistons results in a force sufficient to collapse the first compression spring, resulting in the entire rod-piston assembly relative to the housing to retract the control rod. This corresponds to the "closed" nozzle position. As the second vent pressure is increased further, the force acting on the second piston will be greater than that on the first piston, causing the collapse of the second compression spring and thereby extending the control rod from the controller. By such operation the nozzle vanes move to increase the inlet area of the turbine rotor when the speed of the rotor shaft increases above a pre-determined value whereas the nozzle vanes are moved to reduce the inlet area to the turbine rotor when the shaft speed drops below a pre-determined level. In this way, the speed of the turbine as the compressor driven by the turbine is controlled as desired.

For a more complete understanding of the present invention, and for further details and advantages thereof, reference is now made to the following description taken in conjunction with the accompanying drawings, in which:

FIGURE 1 is a perspective view of the turbocharger of the present invention;

FIGURE 2 is a vertical section taken along lines 2—2 of the turbocharger illustrated in FIGURE 1;

FIGURE 3 is an enlarged view of the bearing assemblies supporting the compressor and turbine shaft of the present invention;

FIGURE 4 is an enlarged section view taken along line 4—4 of FIGURE 2 with the compressor backwall removed for clarity;

FIGURE 5 is a partially broken away end view as viewed from line 5—5 of FIGURE 2 looking in the direction of the arrows;

FIGURE 5a is a section view taken along line 5a—5a of FIGURE 5 looking in the direction of the arrows.

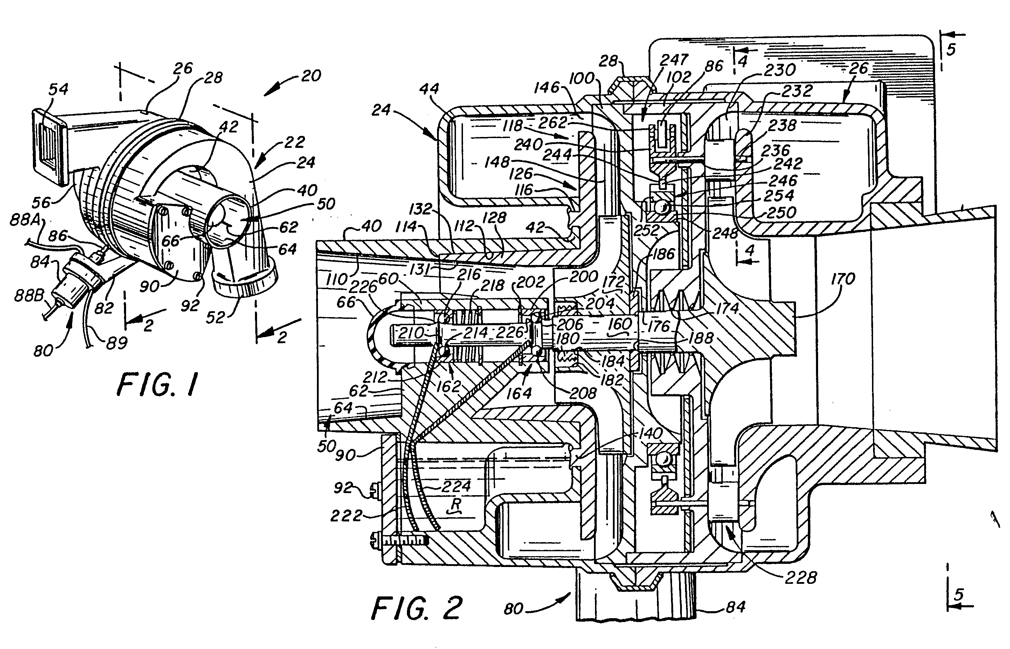

FIGURE 1 is a perspective view of a turbocharger 20 embodying the present invention which turbocharger is described in detail in European Patent Application EP—A—30,230 which is the parent application of the present application. The turbocharger includes an outer structure 22 consisting of a compressor housing unit 24 coupled to a turbine housing unit 26 by a V-clamp band 28.

Referring to FIGURES 1 and 2, compressor housing unit 24 includes a tubular inlet port 40 with a transverse wall 42 attached to one end of port 40 and extending outwardly therefrom. A circumferential chamber 44 is attached from wall 42. Inlet port 40 defines a compressor air inlet 50 and circumferential chamber 44 defines a compressor exhaust 52. Turbine housing 26 defines a turbine air inlet 54 and a turbine exhaust 56.

In operation of the turbocharger, air is drawn into inlet 50 and compressed air is discharged from exhaust 52 to an internal combustion engine to which the turbocharger is mounted. Exhaust air from the engine is channeled into turbine air inlet 54 to drive the turbocharger turbine and is exhausted through turbine exhaust 56.

Referring still to FIGURES 1 and 2, a bearing support cylinder 60 is mounted within inlet port 40 by a plurality of vanes 62 extending from the inside wall surface 64 of inlet port 40. A cap 66 is mounted over the end of support cylinder 60. A piston type actuator 80 is mounted by bracket 82 (FIGURE 1) to turbine housing 26. Actuator 80 includes a controller 84 operated to extend and retract control rod 86 as will be discussed hereinafter in greater detail. Air lines 88 and 89 provide air to controller 84 as necessary to operate rod 86. An oil reservoir cover plate 90 is attached to compressor housing unit 24 by a plurality of screws 92.

Referring specifically to FIGURE 2, a compressor backwall 100 and a turbine backwall 102 are positioned intermediate of compressor housing unit 24 and turbine housing unit 26 when these two units are assembled. These four components are piloted one to another and held in assembly by V-clamp 28. As can be appreciated from a close review of FIGURE 2, only a single V-clamp is required to hold the entire assembly together. As previously described, compressor housing unit 24 includes a tubular inlet port 40 with a transverse wall 42 attached to one end thereof to one of the inlet ports and extending outwardly therefrom. A circumferential chamber 44 is attached to the end of wall 42 remote from inlet port 40 and has a varying area around its circumference increasing to the discharge provided by compressor exhaust 52 (FIGURE 1).

Inlet port 40 has a first inside wall portion 110 having a converging diameter toward wall 42 and a second inside wall portion 112 joined to first inside wall portion 110 by a step 114. The second inside wall portion 112 has a diverging diameter toward wall 42. Wall 42 has a plurality of circumferentially spaced apertures 116 therethrough. Chamber 44 has an opening 118 substantially in the plane of wall 42 in addition to compressor exhaust 52.

A forward compressor wall insert 126 includes a tubular throat 128 and a circular disc 130 attached transversely from one end of throat 128. Throat 128 has an inside wall surface 131 having a diameter converging toward disc 130 and an outer surface 132 having a diameter diverging toward disc 130. The diverging diameter surface 132 corresponds to the diverging surface of inside wall portion 112 of inlet port 40 such that throat 128 may be inserted within and mated with inlet port 40. The converging diameter inside wall surface 131 of throat 128 corresponds to the extension of converging diameter of first inside wall portion 110 of inlet port 40. When insert 126 is mated into inlet port 40, a continuous converging diameter is provided from the inlet of port 40 inwardly into the turbocharger.

As to the compressor housing unit 24 and the compressor wall insert 126 shown in FIGURE 2 .

and their production it is referred to co-pending European Patent Application EP—A—122,328 which is also a divisional application of European Patent Application EP—A—30,230.

A plurality of rivet-like protrusions 140 extend from disc 130 and correspond to apertures 116 in wall 42. With the insert engaged to compressor housing 24 with the end of throat 128 engaging step 114 of inlet port 40, protrusions 140 are engaged through apertures 116 with disc 130 abutting the corresponding surface of wall 42. As is shown in FIGURE 2, protrusions 140 have been inserted into apertures 116 and the heads thereof deformed to attach insert 126 to housing 24. Disc 130 extends beyond wall 42 to partially cover opening 118 of chamber 44. A circumferential gap 146 is formed between the outer tip of disc 130 and the wall of chamber 44, and a diffuser area 148 is formed between disc 130 and compressor backwall 100 between centrifugal flow compressor rotor 172 and gap 146 leading to chamber 44.

Referring still to FIGURE 2, bearing support cylinder 60 is supported concentrically within inlet port 40 by a plurality of vanes 62 extending inwardly from wall surface 64 of port 40. Turbocharger 20 further includes a shaft 160 supported for rotation in bearing support cylinder 60 by two ball bearing assemblies 162 and 164. A radial flow turbine rotor 170 is mounted at one end of shaft 160 and a centrifugal flow compressor rotor 172 is mounted intermediate of turbine rotor 170 and bearing assemblies 162 and 164. Shaft 160 passes through aperture 176 in compressor backwall 100 and labyrinth seal 174 in turbine backwall 102.

Turbine rotor 170 is fixedly attached to shaft 160, such as by welding, and compressor rotor 172 is retained in position on shaft 160 by retainer nut 180. Compressor rotor 172 is drilled to receive shaft 160 and counterbored to form a bore 182. Bore 182 has a diameter larger than the outer diameter of retainer nut 180 such that retainer nut 180 may be pressed onto shaft 160 into engagement with the bottom wall 184 of bore 182 to retain the compressor rotor in position on shaft 160 as described in co-pending European Patent Application EP—A—111,782 which is also a divisional application of European Patent Application EP—A—30,230. A compressor rotor shim 186 is positioned between compressor rotor 172 and a step 188 in shaft 160 to accurately position the compressor rotor in the axial direction.

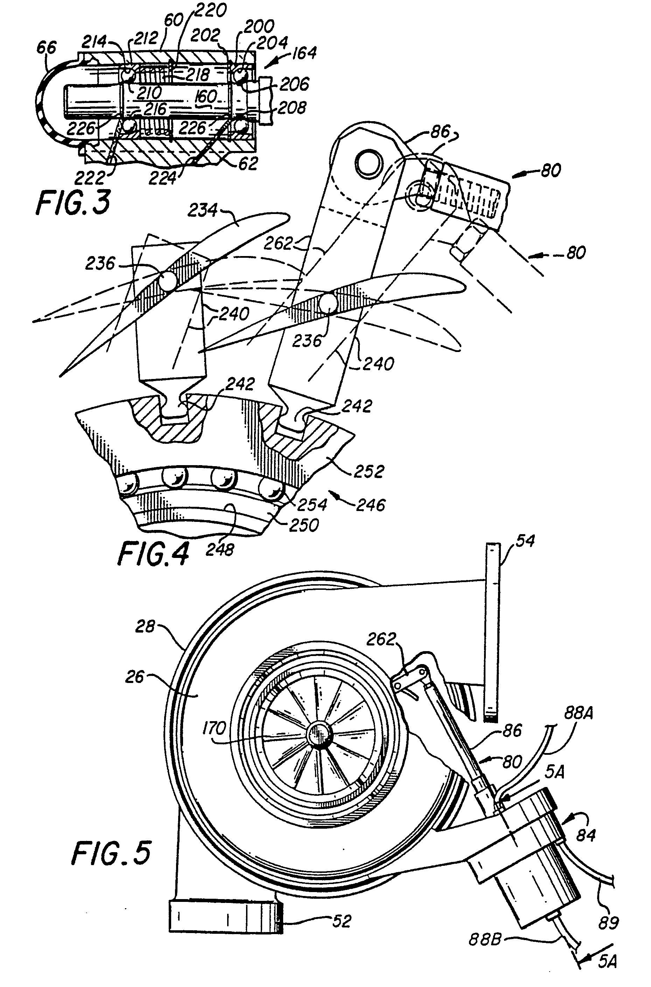

Referring to FIGURES 2 and 3, a ring 200 is fitted within the end of cylinder 60 adjacent compressor rotor 172 and is prevented from moving into cylinder 60 by a retaining ring 202 attached to cylinder 60. Outer raceway 204 of bearing assembly 164 is formed in ring 200, the inner raceway 206 being integrally formed in shaft 160. Balls 208 are engaged between the inner and outer raceways to form bearing assembly 164.

Bearing assembly 162 includes inner raceway 210 formed integrally in shaft 160 and an outer ring 212 slidable within cylinder 60 with an outer raceway 214 formed therein for receiving balls 216. A compression spring 218 is engaged between ring 212 and a retaining ring 220 fixed within cylinder 60 and biases ring 212 outwardly to fix the position of balls 216 and 208 in bearing assemblies 162 and 164, respectively, thereby fixing the position of shaft 160.

As is shown in FIGURES 2 and 3, outer raceway 204 is formed in ring 200 with the ball radius on only one side. Thus, the assembly of bearing assembly 164 is made by positioning a full complement of balls 208 in raceway 206, and engaging ring 200 therearound. Similarly, outer raceway 214 is formed in ring 212 with the ball radius on only one side. Balls 216 of bearing assembly 162 are assembled by moving outer ring 212 to compress spring 218 and inserting a full complement of balls 216 in raceway 214 of shaft 160. By releasing ring 212, spring 218 automatically forces the ring into engagement with balls 216 to form bearing assembly 162 while simultaneously engaging ring 200 against balls 208 of bearing assembly 164.

Alternatively, less than a full complement of balls 208 and 216 may be used in bearing assemblies 162 and 164 by the use of an appropriate retainer. Depending upon the application, an oil impregnated retainer or a sacrificial retainer which replenishes a self-lubricating coating to the balls may be used. The mounting of shaft 160 within cylinder 60 is completed by the engagement of cap 66 on the end of cylinder 60 to close the opening in cylinder 60 remote from compressor rotor 172.

In connection with the bearing arrangement it is referred to co-pending European Patent Application EP—A—121,670 which is also a divisional application of European Patent Application EP—A—30,230.

The use in the present bearing system of the ball bearing arrangement employing integral inner raceways permits a larger diameter shaft and thus provides a very "stiff" shaft. Additionally, this bearing arrangement provides a very tight bearing system permitting very little radial or axial movement. As a result, the present bearing system substantially reduces the clearance required between the compressor and turbine and surrounding housing, and concentricity problems are minimized.

The bearing assemblies 162 and 164 may be "starved" of oil. The only lubrication provided to the bearing assemblies is through wicks 222 and 224 which transfer oil from a reservoir R by capillary action to ramps or slingers 226. Oil supplied to slingers 226 is projected by centrifugal force to bearing assemblies 162 and 164 during rotation of shaft 160.

In this way, the use of engine oil as a lubricant for the turbocharger bearings, and the associated plumbing and seals are eliminated. Moreover, the failures resulting from the use of contaminated engine oil as a lubricant or the lack of engine oil during starts is avoided. Moreover, no oil seals are required and bearing failure resulting from the failure of seals is also eliminated.

Alternatively, the bearing assemblies may be permanently lubricated with a heavy consistency oil or grease which is packed into the raceways and around the balls of the bearing assemblies. As another alternative, an oil impregnated phenolic retainer may be used to provide lubricant to the balls for a considerable period. In either of these cases, the need for wicks 222 and 224 and slingers 226 would be eliminated although with a reduced bearing life.

In conventional turbochargers where journal bearings and disc type thrust bearings are employed, continuous lubrication of the bearings is required. Additionally, because the turbine is subjected to temperatures up to 871°C (1600°F), where the bearings are adjacent the turbocharger turbine, continuous lubrication is required to sufficiently cool the bearings to prevent failure through overheating. Even ball bearings would require a continuous flow of oil for cooling. The ability of the present system to successfully function without conventional flood lubrication used to both lubricate and cool the bearings is the result of the particular arrangement of the type of bearings used and the relative location of the bearings to the compressor and turbine.

As will be described hereinafter in greater detail, because the present arrangement eliminates the need for a continuous flow of oil for bearing lubrication and cooling, the present turbocharger may be mounted at any desired orientation. In contrast, conventional turbochargers have been severely limited as to their possible orientation.

In the present turbocharger, the journal and disc bearings of conventional turbochargers are replaced by the more precise ball type bearing assemblies, thereby eliminating the need for a continuous flow of lubrication for the bearings. Additionally, both the compressor and the turbine of the present turbocharger are overhung to one side of the bearing assemblies, and the turbine is maximally removed from the bearing assemblies with the compressor positioned between the bearing assemblies and the turbine. As this arrangement provides sufficient thermal insulation between the turbine and the bearing assemblies, the bearings will not be sufficiently heated as to require conventional lubrication methods.

The back to back compressor/turbine arrangement not only reduces substantially the heat conducted to the bearing assemblies but also minimizes the thermal expansion effects, thereby lowering the blade tip clearances required. This arrangement further eliminates the conventional bearing housing and provides a more compact package than present straddle mounted rotors having the support bearings intermediate of the compressor and turbine.

Additionally, the use of antifriction ball bearing assemblies 162 and 164 provides much better control over the radial and axial movement of the compressor and turbine, thereby allowing reduced blade tip clearance. This in turn appreciably improves the compressor and turbine efficiency. Compared to journal bearings, the use of the antifriction ball bearing assemblies 162 and 164 also reduces the turbine work required to drive the bearings. This in turn reduces the engine back pressure resulting in the improvement of the specific fuel consumption as well as enhancing the ability to accelerate the rotor.

The present turbocharger comprises a nozzle area control structure 228 for selectively varying the turbine nozzle area to control the speed or pressure output of the turbocharger. Referring to FIGURES 1 and 2, exhaust gas from the internal combustion engine on which the turbocharger is mounted is injected into the turbocharger through turbine air inlet 54 and channeled against the blades of turbine rotor 170 through a nozzle area 230 formed by turbine backwall 102, a wall 232 parallel thereto and the nozzle vanes 234. This nozzle area is controlled by structure 228 including a plurality of movable nozzle vanes 234 positioned circumferentially about the nozzle area and rotatable to vary flow velocity and angle of exhaust gas to turbine rotor 170. Referring to FIGURES 2 and 4, vanes 234 include trunnions 236 and 238 extending from opposite sides thereof. Trunnion 236 extends through turbine backwall 102 and is attached to actuation lever 240. Trunnion 238 extends into wall 232.

A nipple 242 is formed on one end of each actuation lever. These nipples extend in radial slots 244 formed in a control ring 246. Control ring 246 and actuation levers 240 are situated in air space gap 247 intermediate of compressor rotor 172 and turbine rotor 170. Control ring 246 is concentrically positioned about the axis of shaft 160 and is received on a cylindrical surface 248 extending from compressor backwall 100.

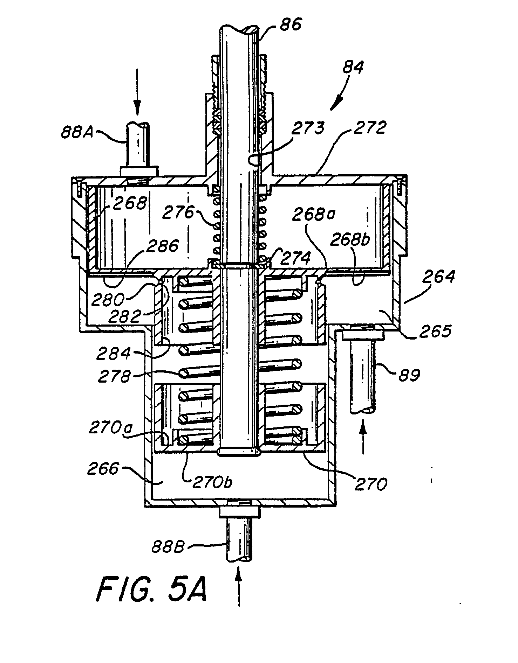

The control ring 246 includes an inner ring 250 and an outer ring 252 formed with an inner and outer raceway, respectively, for receiving a plurality of balls 254 therebetween. Inner ring 250 is fixedly attached to the cylindrical surface 248 extending from compressor backwall 100, and outer ring 252 rotates angularly relative to the inner ring. Referring to FIGURE 4, it is seen that by the rotation of outer ring 252, each of the actuation levers 240 is rotated about the axes of trunnions 236 and 238, resulting in the simultaneous rotation of each nozzle vane 234. As is shown in FIGURES 4 and 5, one of the actuation levers 240 is provided with an extension 262. Control rod 86 is attached to the end of extension 262 remote from nipple 242. Control rod 86 includes a threaded eye bolt 86a attached to the extension 262 by an axis pin. The opposite end of eye bolt 86a is threadedly received within control rod 86 and is adjustable therein to allow for the readjustment of nozzle vanes 234 about their rotational axes. By the movement of control rod 86, actuation lever 240 is pivoted to angularly rotate outer ring 252 of control ring 246 thereby rotating each of the other actuation levers 240 and nozzle vanes 234 attached thereto.

Referring to FIGURE 5, an actuator for use on an otto cycle engine is shown. In the system illustrated, control rod 86 is controlled by a piston type actuator 80. Actuator 80 is controlled by compressor discharge pressure fed into controller 84 through line 88. Increased pressure into actuator 80 causes the extension of control rod 86 and the corresponding opening of the compressor nozzle area.

Referring to FIGURE 5a, control rod 86 is controlled by controller 84 to vary the position of nozzle vanes 234. Controller 84 includes a housing 264 defining a large cylinder 265 and a small cylinder 266 therein. A large piston 268 having a forward face 268a and a rearward face 268b is received within cylinder 265. A smaller piston 270 having a forward face 270a and a rearward face 270b is received within small cylinder 266. A front plate 272 is attached to housing 264 by suitable bolts and has an aperture 273 therein for receiving control rod 86 into the housing. Piston 270 is fixedly attached to the end of control rod 86 while piston 268 is free to slide relative to control rod 86 being arrested only by ring 274 fixedly attached to control rod 86 adjacent forward face 268a of piston 268.

A spring 276 is entrained around control rod 86 and captured between piston 268 and front plate 272. A larger spring 278 encircles control rod 86 and is captured between piston 270 and piston 268. Air lines 88a and 88b communicate to cylinder 266 to the rearward face 270b of piston 270 and within cylinder 265 to the forward face 268a of piston 268. Air lines 88a and 88b have their ends opposite controller 84 attached to the engine intake manifold to convey manifold pressure to the forward face 268a and rearward face 270b of pistons 268 and 270, respectively. Line 89 provides atmospheric pressure to the rearward face 268b and forward face 270a of piston 268 and 270, respectively.

Annular grooves 280 and holes 282 through guide cylinder 284 protruding from the rearward face 268b of piston 268 assures the transmission of atmospheric pressure along the full back surface of piston 268. Likewise, radial grooves 286 on the rearward face of piston 268 facilitate the communication of pressure to the full surface of the rearward face of the piston.

Controller 84 is designed to extend control rod 86 to open nozzle vanes 234 to turbine rotor 170 at low and high manifold pressures and to retract control rod 86 to close these nozzle vanes at intermediate pressures. More specifically, while operating at a closed throttle position where the intake manifold is under a vacuum condition, for example with manifold pressures of 0.35 to 0.56 kg/cm$^2$ (5 to 8 psi) absolute, the controller operates to extend rod 86 to open nozzle vanes 234 permitting the engine to operate with as little back pressure as possible. This results from the larger atmospheric pressure (approximately 1.03 kg/cm$^2$ (14.7 psi) absolute) exerted on rearward face 268b of piston 268 from line 89 compared to pressure from line 88 which is substantially less than atmospheric pressure.

While the net pressure differential across piston 270 provides a force tending to retract control rod 86, the surface areas of pistons 268 and 270 are designed so that the outward force on piston 268 is sufficient to overcome both the retractive pressure on piston 270 as well as the spring force of spring 276.

The piston size and spring rate of spring 276 are designed such that as the manifold pressure nears atmospheric pressure, such as 0.84 kg/cm$^2$ (12 psi) absolute, control rod 86 is drawn within controller 84 to close nozzle vanes 234 thereby increasing the speed of turbocharger 20 and the pressure ratio provided from the turbocharger compressor. Controller 84 is designed to begin closing vanes 234 immediately before atmospheric pressure is reached because this intake manifold pressure corresponds to an open carburetor throttle and this indicates a requirement for turbocharger boost.

Referring to FIGURE 5a, as the manifold pressure in line 88a exerted against forward face 268a of piston 268 nears atmospheric pressure, this pressure in conjunction with the action of spring 276 overcomes the atmospheric pressure exerted from line 89 on the rearward face 268b of piston 286 to withdraw control rod 86 within controller 84. The pressure differential across piston 270 still provides a net force retracting piston 270 within its cylinder thus assisting in the retraction of control rod 86 within controller 84.

As the manifold pressure increases to a value in excess of atmospheric pressure, for instance 1.41 kg/cm$^2$ (20 psi) absolute, the manifold pressure exerted through line 88b on the rearward face 270b of piston 270 overcomes the spring force of spring 278 causing the movement of control rod 86 outwardly from controller 84 to again open vanes 234 thereby preventing overpressurization. Control rod 86 is extended from controller 84 in this pressure situation even though piston 268 is retained in a fully retracted position within cylinder 265 because of the capability of control rod 86 to move freely relative to piston 268 when piston 270 overcomes the spring force of spring 278 to move toward piston 268.

Therefore, the present controller provides a system for opening the nozzle vanes 234 at manifold pressures having an absolute reading below a predetermined value less than atmospheric as provided for by the design of the controller and components therein. Likewise, the controller provides for the closing of vanes 234 at manifold pressures ranging from some predetermined value less than atmospheric to some value greater than atmospheric pressure and for the opening of vanes 234 at manifold pressures in excess of a predetermined value above atmospheric pressure. Of course, it will be understood that the particular pressures at which the vanes are opened and closed can be readily altered by variation of the areas of pistons 268 and 270 and the variation in the spring rates and initial deflections of springs 276 and 278.

For diesel cycle engines, a solenoid may be used to control piston 268 such that the solenoid maintains shaft 86 in an extended position during light load operations of the engine but releases the shaft when a heavy load is demanded. Upon release of the shaft, spring 276 retracts shaft 86 to close the nozzles thereby increasing turbocharger speed. When sufficient pressure is communicated from the intake manifold to face 270b of piston 270, shaft 86 is extended as previously described to open the nozzles thereby controlling manifold pressure.

In operation of the variable area turbine nozzle, a control signal, such as compressor discharge pressure, is communicated to actuator 80 which appropriately extends or retracts control rod 86 in accordance with the signal to actuator 80. This in turn results in the rotation of actuation lever 240 attached to control rod 86 and the simultaneous angular rotation of outer ring 252 of control ring 246. The rotation of outer ring 252 in turn rotates each actuation lever 240 to correspondingly set the angle of nozzle vanes 234.

FIGURE 4 shows in phantom and solid lines nozzle vanes 234 in closed and open positions. It will be appreciated that each of the nozzle vanes is set by the rotation of control ring 246 through the movement of a single control rod 86 controlled by a single actuation lever 240.

Conventional uncontrolled turbochargers normally produce a boost pressure directly related to compressor speed, with compressor speed generally corresponding to engine speed. Therefore, boost pressure in conventional uncontrolled turbochargers is substantially less at low engine speeds than at higher engine speeds. Therefore, at a low engine speed a conventional turbocharger is ineffective in improving engine performance. Moreover, upon acceleration, there is a substantial "lag time" until the turbocharger reaches a speed producing a sufficient boost pressure to effectively improve engine performance.

The present turbocharger may be controlled to provide boost pressure at low engine speeds. This results in improved engine performance at lower engine rpm and eliminates or reduces the "lag time" associated with conventional turbochargers.

The present turbocharger accomplishes this result through the control of the variable turbine nozzles to maintain the turbocharger turbine and compressor speed at a level that produces the desired boost at all engine RPM levels.

## Claims

1. In a turbocharger arrangement having a turbine rotor (170) and controlled vanes (234) for varying the inlet nozzle area (230) to the turbine rotor (170), a controller (84) for controlling said vanes having a housing (264) and piston structure (268, 270) slidable within the housing (246) with a rod (86) attached to said piston structure (268, 270) and in turn attached to said vanes (274) whereby said vanes (234) are moved upon movement of said piston structure (268, 270),

said housing (264) defining a first cylinder (265) and a second cylinder (266) of a smaller cross-sectional area than said first cylinder (265),

said piston structure comprising

a first piston (268) slidable within said first cylinder (265), and

a second piston (270) slidable within said second cylinder (265), said controller being characterized by:

a rod (86) attached to said second piston (270) and slidable in one direction through said first piston (268); said rod (86) connected to the vanes (234) whereby the inlet nozzle area (230) to the turbine rotor (170) is controlled by the axial movement of said rod (86);

first compression spring means (276) biasing said rod (86) and first piston (268) toward said second piston (270);

second compression spring means (278) positioned between said first and second pistons (268; 270); said second spring means (278) having a greater spring force in compression than said first spring means (276);

first vent means (89) for venting a first pressure to the cylinder area between said first and second pistons (268; 270) to apply said first pressure on confronting faces of said first and second pistons (268; 270); and

second vent means (88a) for communicating a second pressure to the faces of said first and second pistons (268; 270) opposite the confronting faces of said pistons.

2. The controller according to Claim 1 characterized by:

a solenoid for controlling the first piston whereby, in use, under light loads, the solenoid maintains the rod in a position such that the inlet nozzle area is open and under heavy loads the solenoid releases the piston such that the controller may close the inlet nozzle area.

3. The controller according to Claim 1 characterized by:

a turbine shaft (160), a turbine rotor (170) attached to one end of said turbine shaft for receiving driving gases, a compressor rotor (172) fitted on said turbine shaft for rotation with said turbine rotor, bearing means (162, 164) for rotatably supporting said turbine shaft such that said compressor rotor and turbine rotor are overhung to one side of said bearing means such that said bearing means is remote from said turbine rotor, the controller vanes being spaced about said turbine and in the inlet through which gases are supplied to said turbine rotor and control means (240, 246) connected to the controller, the control means being positioned intermediate of the compressor and turbine for rotating said controllable vanes to vary the flow of driving gases to said turbine.

4. The controller according to Claim 3 characterized by:

a control ring having an outer ring (252) movable angularly relative to an inner ring (250) and an actuation lever rotatable with each vane having one end engaged in the outer ring, the rod of the controller being attached to one of the actuation levers so that the controller can selectively move the control rod to pivot the actuation lever attached thereto whereby the outer ring is rotated and the actuation lever and each vane attached thereto is pivoted.

## Patentansprüche

1. In einer Turboladeranordnung mit einem Turbinenrotor (170) und gesteuerten Schaufeln (234) zur Veränderung des Einlaßdüsenbereiches (230) zum Turbinenrotor (170) hat eine Steuereinrichtung (84) zur Steuerung der Schaufeln ein Gehäuse (264) und eine im Gehäuse (246) verschiebbare Kolbeneinrichtung (268, 270), an der eine Stange (86) befestigt ist, die außerdem an den Schaufeln (274) angebracht ist, so daß die Schaufeln (234) bei Bewegung der Kolbeneinrichtung (268, 270) bewegt werden,

das Gehäuse (264) bildet einen ersten Zylinder (265) und einen zweiten Zylinder (266) mit kleinerem Querschnittsbereich als der erste Zylinder (265), die Kolbeneinrichtung weist einen im ersten Zylinder (265) verschiebbaren ersten Kolben (268) und einen im zweiten Zylinder (266) verschiebbaren zweiten Kolben (270),

die Steuereinrichtung ist gekennzeichnet durch

eine Stange (86) befestigt an dem zweiten Kolben (270) und in einer Richtung durch den ersten Kolben (268) verschiebbar, wobei die Stange (86) mit den Schaufeln (234) verbunden ist, so daß der Einlaßdüsenbereich (230) zum Turbinenrotor (170) durch die Axialbewegung der Stange (86) gesteuert wird;

erste Druckfedermittel (276), die die Stange (86) und den ersten Kolben (268) in Richtung auf den zweiten Kolben (270) drücken;

zweite Druckfedermittel (278) zwischen dem ersten und dem zweiten Kolben (268; 270), wobei die zweiten Federmittel (278) eine größere Druckfederkraft haben als die ersten Federmittel (276);

erste Belüftungsmittel (89) zum Einbringen eines ersten Druckes in den Zylinderbereich zwischen dem ersten und dem zweiten Kolben (268; 270), um den ersten Druck an die einander zugewandten Flächen des ersten und des zweiten Kolbens (268; 270) zu legen; und

zweite Belüftungsmittel (88a) zur Übertragung eines zweiten Druckes auf die Flächen des ersten und des zweiten Kolbens (268; 270), die den einander zugewandten Flächen der Kolben gegenüberliegen.

2. Steuereinrichtung nach Anspruch 1, gekennzeichnet durch einen Solenoid zur Steuerung des ersten Kolbens, so daß im Gebrauch unter geringer Last der Solenoid die Stange in einer Stellung hält, so daß der Einlaßdüsenbereich offen ist und so daß der Solenoid unter einer großen Last den Kolben freigibt, so daß die Steuereinrichtung den Einlaßdüsenbereich schließen kann.

3. Steuereinrichtung nach Anspruch 1, gekennzeichnet durch eine Turbinenwelle (160), einen Turbinenrotor (170), der an einem Ende der Turbinenwelle zur Aufnahme von Antriebsgasen angebracht ist, einen Kompressorrotor (172), der zur Drehung mit dem Turbinenrotor auf die Turbinenwelle aufgepaßt ist, durch Lagermittel (162, 164) zur drehbaren Halterung der Turbinenwelle, so daß Kompressorrotor und Turbinenrotor an einer Seite der Lagermittel überhängen, wodurch die Lagermittel entfernt vom Turbinenrotor liegen, die steuerbaren Schaufeln im Abstand um die Turbine und im Einlaß, durch den das Gas zum Turbinenrotor geführt wird, liegen, und Steuermittel (240, 246) verbunden mit der Steuereinrichtung, wobei die Steuermittel zwischen Kompressor und Turbine angeordnet sind, um die steuerbaren Schaufeln zur Veränderung des Stroms der Antriebsgase zur Turbine zu drehen.

4. Steuereinrichtung nach Anspruch 3, gekennzeichnet durch einen Steuerring mit einem äußeren Ring (252), der bezüglich eines inneren Ringes (250) winkelbewegbar ist, und einen Betätigungshebel drehbar verbunden mit jeder Schaufel und mit einem Ende in Eingriff mit dem äußeren Ring, wobei die Stange der Steuereinrichtung an einem der Betätigungshebel angebracht ist, so daß die Steuereinrichtung wahlweise die Steuerstange bewegen kann, um den an ihr angebrachten Betätigungshebel zu schwenken, wodurch der äußere Ring gedreht und der Betätigungshebel und jede an ihm angebrachte Schaufel geschwenkt wird.

## Revendications

1. Dans un turbocompresseur comportant un rotor de turbine (170) et des aubes commandées (234) permettant de faire varier la section (230) du diffuseur constituant l'entrée du rotor de turbine (170), un dispositif de commande (84) qui permet de commander ces aubes et qui comporte un boîtier (264) et une structure à fonction de piston (268, 270) qui coulisse à l'intérieur de ce boîtier (246) et dont est solidaire une tige (86) elle-même solidaire des aubes (234), de sorte que ces aubes (234) se déplacent lors d'un déplacement de cette structure à fonction de piston (268, 270), le boîtier (264) constituant un premier cylindre (265) et un second cylindre (266) d'aire en section transversale plus faible que ce premier cylindre (265), la structure à fonction de piston comprenant un premier piston (268) pouvant coulisser à l'intérieur du premier cylindre (265) et un second piston (266) pouvant coulisser à l'intérieur du second cylindre (266), ce dispositif de commande étant caractérisé par une tige (86) solidaire du second piston (270) et pouvant coulisser suivant un sens donné à travers le premier piston (268), cette tige (86) étant reliée aux aubes (234), de sorte que la section de diffuseur (230) constituant l'entrée du rotor de turbine (170) est commandée par le déplacement axial de cette tige (86), par un premier ressort de compression (276) repoussant cette tige (86) et le premier piston (268) vers le second piston (270), par un second ressort de compression (278) disposé entre le premier et le second pistons (268, 270), ce second ressort (278) offrant un effort élastique de compression supérieur au premier ressort (276), par de premiers moyens à fonction d'orifice (89) permettant la transmission d'une première pression vers la zone du cylindre qui est située entre le premier et le second pistons (268, 270) en vue d'appliquer cette première pression sur des faces en regard de ce premier et ce second pistons (268, 270), et par de seconds moyens à fonction d'orifice (88A, 88B) permettant de transmettre une seconde pression sur les faces du premier et du second pistons (268, 270) qui sont situées à l'opposé des faces en regard de ces pistons.

2. Dispositif de commande selon la revendication 1, caractérisé par une électrovanne permettant de commander le premier piston de façon que, en cours d'utilisation, sous de faibles charges, cette électrovanne maintienne la tige dans une position telle que la section d'entrée du diffuseur s'ouvre et, sous de fortes charges, cette électrovanne libère le piston de façon que le dispositif de commande puisse fermer cette section d'entrée du diffuseur.

3. Dispositif de commande selon la revendication 1, caractérisé par un arbre de turbine (160), par un rotor de turbine (170) qui est fixé à une extrémité de cet arbre de turbine de manière à recevoir les gaz moteurs, par un rotor de compresseur (172) qui est fixé sur le même arbre de turbine de manière à tourner avec le rotor de turbine, par des moyens formant paliers (162, 164) servant à porter ledit arbre de turbine en rotation de manière telle que les rotors de compresseur et de turbine soient en porte-à-faux sur un côté de ces moyens formant palier de façon que ces derniers soient situés à l'opposé du rotor de turbine, les aubes du dispositif de commande étant réparties autour de la turbine et dans l'ouverture d'entrée à travers laquelle les gaz sont envoyés au rotor de turbine, et par des moyens de commande (240, 246) reliés à ce dispositif de commande, ces moyens de commande étant disposés en position intermédiaire entre le compresseur et la turbine et servant à faire tourner les aubes commandées de façon à faire varier le débit des gaz moteurs envoyés à la turbine.

4. Dispositif de commande selon la revendication 3, caractérisé par une couronne de commande comprenant une bague extérieure (252) pouvant se déplacer angulairement par rapport à une bague intérieure (250), et par un levier de manoeuvre qui peut tourner avec chaque aube en présentant une extrémité en prise dans ladite bague extérieure, la tige du dispositif de commande étant fixée à l'un des leviers de manoeuvre de façon que le dispositif de commande puisse déplacer sélectivement la tige de commande afin de faire pivoter le levier de manoeuvre fixé sur celle-ci, en faisant ainsi tourner la bague extérieure et pivoter le levier de manoeuvre et chaque aube fixée à celui-ci.

FIG. I

FIG. 2

0 111 781

FIG.3

FIG.4

FIG.5

FIG. 5A